# NEW EUROPEAN PATENT SPECIFICATION

(11) **EP 1 806 261 B2**
(45) Date of publication and mention of the opposition decision: **03.04.2024**
(45) Mention of the grant of the patent: 25.09.2019
(21) Application number: 06000169.0
(22) Date of filing: 05.01.2006
(51) Int. Cl.: B60R 5/04

(54) **Vehicle load floor system**
Kraftfahrzeugladeflächesystem
Système de plancher de chargement de véhicule

(43) Date of publication of application: 11.07.2007
(73) Proprietor: Volvo Car Corporation, 405 31 Göteborg (SE)
(72) Inventor: Berg, Pernilla, 417 43 Göteborg (SE); Hayden, Björn, 442 75 Lycke (SE)
(74) Representative: Valea AB

(56) References cited:
- EP-B1- 0 283 363
- EP-B1- 0 283 363
- EP-B1- 1 048 518
- WO-A2-2004/085195
- DE-A1- 3 332 695
- DE-A1- 3 904 451
- DE-A1- 10 059 787
- DE-A1- 10 300 396
- DE-A1- 19 830 306
- DE-A1- 19 913 743
- FR-A1- 2 871 751
- JP-A- H10 287 185
- US-B1- 6 308 873
- Technische-Daten Audi A3 Sportback2.0 FSI
- Betriebsanleitung Audi A3
- Zeichnung 8P0 863 463 B
- EBAY.Audi A3
- Technische Daten Audi A4 Avant 1.9 TDI
- Technische Daten Audi A4 Avant 2.4
- Technische Daten Audi A4 2.5 TDI Ouattro
- Betriebsanleitung Audi A4 Avant
- Betriebsanleitung Audi A4 Avant Ausschnitt
- Zeichnung 8E9 861 529 A
- EBAY AUDI A4 Avant

## Description

### Field of the invention

The present invention relates to vehicle load floor systems, for example to a system comprising a load floor and associated cooperating parts of a rear compartment of a road vehicle.

### Background of the invention

Contemporary road vehicles, with relatively few exceptions of specialist vehicles employing rear-mounted engines, each include an engine mounted at a front region thereof, include one or more transverse rows of seats at a middle region thereof, and include a rear compartment at a rear region thereof. It is also contemporary design practice in road vehicles to include one or more pairs of doors for enabling user-access to the one or more transverse rows of seats, and a pivoting rear door for enabling users to gain access to the rear compartment. The rear compartment is especially popular for transporting equipment, shopping purchases and similar. Moreover, the rear compartment is also popular for housing certain equipment and accessories for the road vehicle, for example power amplifiers and bass speakers of sound systems as well as various essential tools and parts; such essential tools and parts can include a spare wheel as well as tools for elevating a portion of the vehicle for purposes of exchanging a punctured wheel of the vehicle with the spare wheel.

On account of modern road vehicles being generally reliable, it is found seldom necessary to access the aforementioned essential tools and parts. Thus, in order to render contemporary vehicles as practical as possible, it is customary practice to include a load floor to the rear compartment and locate the essential tools and parts in recesses formed in a corresponding chassis of the vehicle below the load floor. Equipment, shopping purchases and similar are beneficially placed upon the load floor so that the load floor does not need to be disturbed in normal use of the vehicle. In some designs of vehicle, the spare wheel is retained in a mounting on a rear external underside surface of the road vehicle and tools for exchanging the spare wheel are stored under the load floor.

On account of the weight of equipment, shopping purchases and similar weighing up to, for example, 50 kg, it is necessary that the load floor is implemented to be sufficiently structurally strong. For example, in a published United States patent no. US6945594, there is described a load floor attachable to a rear portion of a vehicle floorpan. The load floor is implemented as a one-piece injection-molded body. The injection-molded body includes a panel portion, one or more reinforcement members coupled to the panel portion, and one or more support members extending from the panel portion. The support members are operable to support the one-piece injection-molded body on the floorpan and to minimize a load span across the panel portion. Moreover, the reinforcement members are utilized for sufficiently reinforcing the panel portion for supporting a predetermined load and minimizing deflection of the panel portion under load.

It is known in many types of contemporary vehicles for their rear seats to be provided with hard rear surfaces to their back-leans and also for the rear seats to be pivotally mounted at a bottom region thereof. Such a manner of mounting the rear seats enables them to be pivoted so that their back-leans can be orientated from a near-vertical orientation to a near-horizontal orientation so as to effectively provide an extension of the load floor of the rear compartment for providing the vehicle with an enlarged space at a rear region thereof for transporting more bulky items, for example small items of furniture. However, it is conventional practice to render the load floor of the rear compartment removable by lifting it up so as to gain access to aforementioned essential tools and parts. It many circumstances, such lifting out of the load floor of the rear compartment can be awkward and inconvenient, for example when addressing an occurrence of a puncture in adverse weather conditions. Moreover, rendering a load floor of a vehicle more complex also risks increasing its cost, thereby rendering its corresponding vehicle more costly to manufacture.

Document DE3332695A1 discloses a load floor system comprising a pivotable flap, which will prevent goods stored in the luggage compartment from being pressed against the rear door.

Document DE 199 13 743 A1 discloses a load floor system for segmenting a luggage compartment. The system comprises a floor mat covering with an upper part and a lower part. The upper part can be rotated to a raised position and thereby delimit the luggage compartment.

### Summary of the invention

An object of the present invention is to provide improved implementations of load floor systems for road vehicles which are more practical, easier to use and potentially do not increase costs significantly.

According to a first aspect of the present invention, there is provided a load floor system according to claim 1.

The invention is of advantage in that the load floor system is susceptible to being implemented at substantially similar cost to a contemporary load floor but is configurable to be pivoted to a raised angle and retained thereat for user access to items stored beneath the load floor.

Preferably, in the load floor system, the raised angle corresponds to the load floor being in a substantially vertical orientation.

As an alternative, in the load floor system, the clips are integrally molded into side panels of the rear compartment. Such integral molding of the clips is capable of providing for retention of the load floor at the raised angle without requiring additional costly components to be included in the system.

Preferably, in the load floor system, each of the clips includes a resilient flexible member coupled at its proximate end to its corresponding side panel of the rear compartment, and at its distal end to a projection operable to resiliently engage a corresponding lateral edge of the load floor. The projection is operable to provide resilient retention of the load floor, such that the resilient flexible member provides a spring force to the projection.

Preferably, in the load floor system, the projection has an inclined surface for providing a resilient force in operation in respect of the edge of the load floor for assisting with retaining the load floor at the raised angle when the load floor is user-pivoted to be substantially vertical in orientation at the raised angle. Inclusion of the inclined surface is capable of providing the clip with a more gradual increase in resilient force as the load floor is pivoted in contact relative to the clip.

Preferably, in the load floor system, the hinge arrangement at the transverse axis is configured to be spaced rearward apart from a pivotal axis of rear seats of the vehicle by way of a separation panel. Such an implementation of a pivoting arrangement is of benefit for the load floor on account of back rests of rear seats of the vehicle not being substantially vertical in normal use, the separation panel thereby enabling the load floor to be pivoted to a substantially vertical orientation at the raised angle.

Preferably, in the load floor system, the separation panel is disposed to be horizontal in operation and is operable to be non-pivotal.

Preferably, in the load floor system, the load floor includes one or more reinforcement features for increasing a load-bearing capability of the load floor. Such reinforcement features optionally, as elucidated later, include strengthening ribs, strengthening members and similar types of structure.

Preferably, in the load floor system, the load floor is provided with at least one user handle at a rear edge thereof spatially remote from the hinge arrangement at the transverse axis, the user handle being operable to assist with pivoting the load floor from the horizontal orientation to the raised angle.

In the load floor system, the load floor is implemented as a planar panel, the panel being fabricated from at least one of: pressed metal sheet, molded plastics material, molded plastics material including one or more reinforcements.

Preferably, in the load floor system, the load floor includes a raised peripheral region around at least a part of a peripheral edge thereof.

### Description of the diagrams

Embodiments of the invention will now be described, by way of example only with reference to the following diagrams wherein:
- Figure 1: is a side-view of a road vehicle for indicating a location of a load floor of the vehicle;
- Figure 2: is a rear view of the vehicle of Figure 1 with its load floor disposed in a horizontal orientation;
- Figure 3: is a rear view of the vehicle of Figure 1 with its load floor pivoted at a raised angle to be disposed in substantially a near-vertical orientation engaged with lateral clips of the vehicle;
- Figure 4: is a view of one of the clips shown in Figures 2 and 3, the clips being integral to side panels of the vehicle; and
- Figure 5: is a cross-sectional illustration of one of the clips of Figure 3 in operation as the load floor is pivoted into contact and past a projection of the clip to maintain the load floor in its near-vertical orientation.

### Description of embodiments of the invention

In describing embodiments of the invention, a location of a load floor within a vehicle will be firstly elucidated. Thereafter, an implementation of the load floor will be described. Finally, operation of the load floor in relation to surrounding parts of the vehicle will be described. The load floor in conjunction with its surrounding parts are to be considered to be a vehicle load floor system.

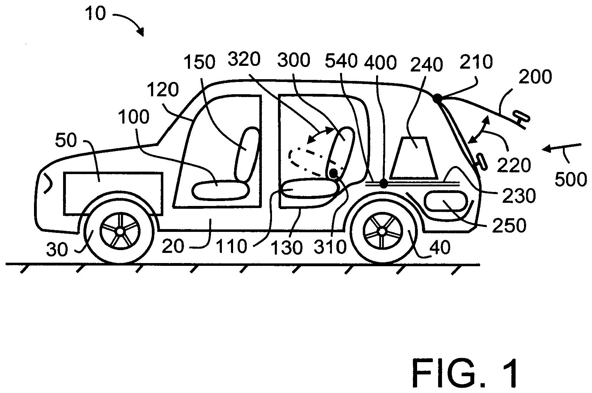

Referring to Figure 1, there is shown a road vehicle indicated generally by 10. The vehicle 10 includes a vehicle chassis 20 provided with front and rear wheel sets 30, 40 respectively. At a front region of the vehicle 10 is housed an engine 50 for providing motive power to the front wheel set 30 for propelling the vehicle 10 in operation. The vehicle 10 further includes front and rear transverse rows of seats 100, 110 with corresponding front and rear user access doors 120, 130 respectively. Optionally, back-leans 150 of the front row of seats 100 can be pivotally mounted at a bottom region thereof for purposes of user access to the rear row of seats 110 so as to circumvent a need to provide the rear user access doors 130. At a rear region of the vehicle 10, there is provided a rear access door 200, often colloquially referred to as a "hatch door" or "boot door". The rear access door 200 is pivotally mounted at an upper portion thereof so as to be operable to pivot substantially about an axis 210 in a manner as indicated by an arrow 220. Moreover, at the rear region of the vehicle 10, there is further included a load floor 230 operable to bear an upper load 240 thereon; the upper load 240 can, for example, constitute aforementioned shopping, equipment and similar. There is formed into the chassis 20 at the rear region of the vehicle 10 one or more recesses for accommodating aforementioned essential tools and parts denoted by 250, and optionally also audio equipment and such like. Beneficially, the recesses formed into the chassis 20 have raised portions therebetween whose upper surfaces are at a height to provide distributed support to the load floor 230 when folded down in a horizontal orientation wherein an underside of the load floor 230 contacts onto the aforesaid raised portions of the chassis 20. Such an arrangement circumvents a need for the load floor 230 to include numerous strengthening ribs so that it can bear the weight of the upper load 240 across a full transverse width and longitudinal depth of the load floor 230.

Optionally, the rear row of seats 110 includes corresponding back-leans 300 with hard rear surfaces facing towards the load floor 230. Moreover, the back-leans 300 are pivotable at a bottom region thereof about an axis 310 so as to be adjustable between substantially vertical and substantially horizontal configurations as denoted by an arrow 320. In the horizontal configuration, the back-leans 300 are operable to provide an extension of the load floor 230 so as to provide the vehicle 10 with an enlarged rear volume capacity for transporting larger items, for example furniture.

In the vehicle 10, the load floor 230 is pivotally mounted so as to be operable to pivot about an axis 400 spatially located a relatively short distance behind a lower region of the rear seat row 110. Such pivotal mounting can optionally be achieved in several ways including:
(a) one or more hinges;
(b) one or more strips of flexible material operable to function as a form of hinge;
(c) an elongate transverse rod at a front edge of the load floor, the elongate rod being pivotally received in corresponding recesses at interior lateral sides of the vehicle 10.

The load floor 230 is thereby configurable between being disposed horizontally and being disposed at a raised angle. Moreover, as will be further elucidated later, lateral edges of the load floor 230 are operable to cooperate with clips (not shown in Figure 1) integrally molded into side panels (not shown in Figure 1) adjacent to the load floor 230. The clips are configured so as to provide a resistance force to the load floor 230 when pivoted to be disposed at the aforesaid raised angle so as to retain the load floor 230 at the raised angle until a sufficient force is applied by a user to the load floor 230 to force it past the clips pivotally towards being disposed horizontally; alternatively, the user can apply finger-force to the clips in a lateral outward direction in order to allow the load floor 230 to pivot past the clips and thereby back to its horizontal position.

Such convenient pivotal mounting of the load floor 230 and provision of aforementioned clips in the side panels adjacent to the load floor 230 for retaining the load floor 230 when pivoted to the raised angle are distinguishing features of the present invention. Such an assembly including the load floor 230 and its clips enable a user in a puncture situation or similar to pivotally lift the load floor 230 and clip it at the raised angle, thereby providing the user with use of both his/her hands for accessing the essential tools and parts 250. For example, removing a spare wheel from the rear region of the vehicle 10 represents for many users, for example people of small build and elderly people with less physical strength, a considerable exertion requiring both hands to be available. The assembly including the load floor 230 will now be further elucidated in detail.

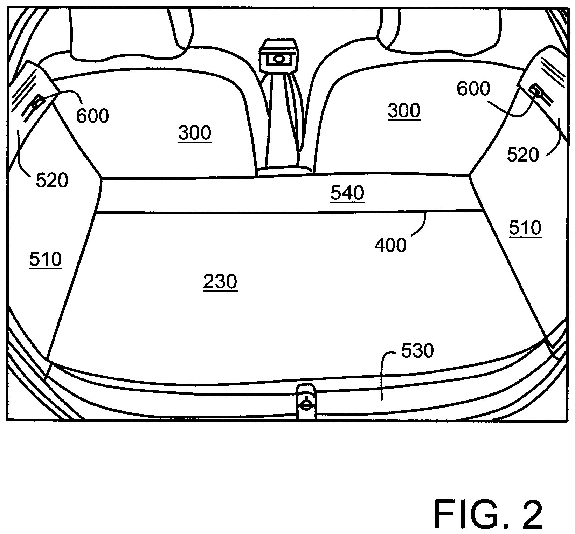

Referring to Figure 2, there is shown a view in a direction as denoted by an arrow 500 in Figure 1. The view is with the rear access door 200 pivoted into an open state to expose the load floor 230 disposed horizontally, a first lower set of side panels 510 adjacent to the load floor 230, and a second upper set of side panels 520 also adjacent to the load floor 230. Conveniently, a rear bumper 530 of the vehicle 10 has an upper surface which is higher than the load floor 230 when disposed horizontally so as to hinder the upper load 240 from rolling out of the vehicle 10. A horizontal panel 540 is conveniently included between the axis 400 and the axis 310 and/or a bottom region of the back-lean 300. The second upper set of side panels 520 includes the aforementioned integrally molded clips near edges of the second upper set of side panels 520 abutting onto the rear row of seats 110; the clips are denoted by 600. Alternatively, the clips 600 are separately molded components which are assembled onto the second upper set of side panels 520.

Optionally, the first lower set of side panels 510 and the second upper set of side panels 520 can be combined and implemented as a pair of side panels including associated clips 600 at right and left portions of the vehicle 10.

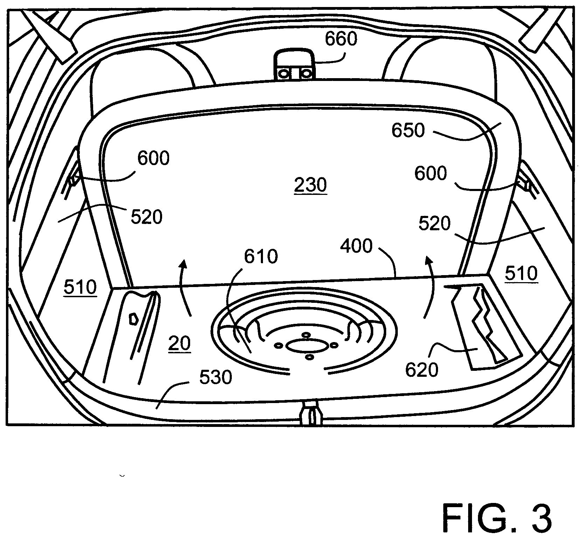

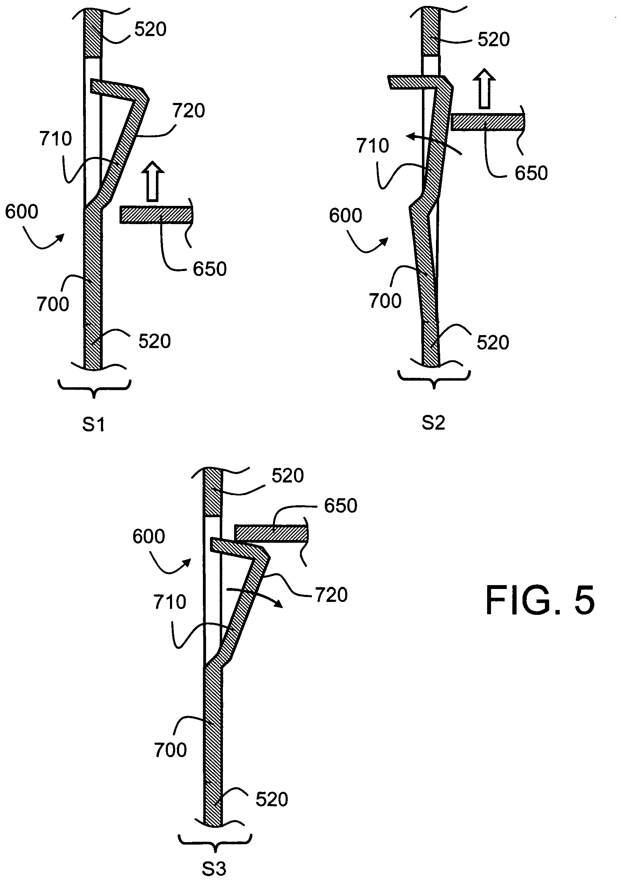

Referring to Figure 3, a view in the direction 500 is again shown with the load floor 230 pivoted to the raised angle wherein lateral edges of the load floor 230 are operable to engage onto the clips 600 in a manner as depicted in steps S1 to S3 in Figure 5. By pivoting the load floor 230 to the raised angle, access is provided to the aforesaid essential tools and parts 250, namely a spare wheel 610 and tools 620. The load floor 230 is provided with a peripheral ridge 650 as illustrated to ensure that it is precisely engaged into position when disposed horizontally effectively onto the chassis 20; the ridge 650 is effective at ensuring that the load floor 230 remains laterally aligned in position when in its horizontal orientation so as to avoid acoustic chatter and noise in operation. Moreover, the load floor 230 is conveniently provided substantially centrally on a peripheral edge thereof remote from the axis 400 with a pivotally-mounted user-grippable handle 660 as illustrated for assisting users to pivotally pull up the load floor 230 towards the aforesaid raised angle when desirous to access the essential tools and parts 250.

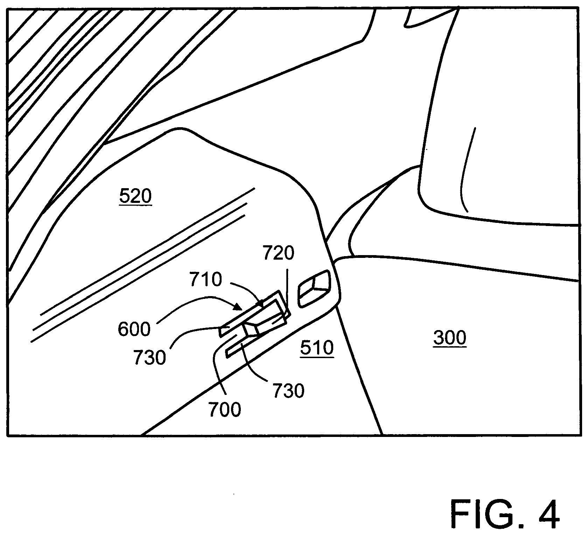

Referring to Figure 4, there is shown an illustration of the clip 600 provided on a left-hand side of the vehicle 10 when looking substantially in a direction of the arrow 500. As elucidated in the foregoing, the clip 600 is integrally molded with the second upper panel 520. The clip 600 includes a resilient bendable portion 700 and an end projecting portion 710 projecting inwardly towards an interior of the vehicle 10; the resilient bendable portion 700 is susceptible to undergoing elastic deformation when the load floor 230 is pivoted and forced therepast. The end projection 710 has an inclined surface 720 for resiliently contacting in a non-abrupt manner onto the side edge of the load floor 230 when the load floor 230 is pivotally to the aforementioned raised angle; thus, the inclined surface 720 is inclined backwardly as illustrated so as to provide less resistance toward the load floor 230 when being pivotally raised past the clip 600 in comparison to when the load floor 230 is pulled past the load clip 600 towards a horizontal orientation; beneficially, the projection 710 is pressed by user finger-force in a lateral outward direction in order to release the load floor 230 from engagement with the clip 600. Elastic deformation of the bendable portion 700 is operable to provide the aforesaid resistance force provided by the clip 600 vis-à-vis the load floor 230. The resilient bendable portion 700 and the end projection 710 are provided with an open channel 730 formed therearound so that the portion 700 and the projection 710 are capable of deflecting relative to the second upper panel 520 when lateral force is applied thereto by way of pivoting the load floor 230. The channel 730 can be formed by molding, by using a punching tool applied to the upper panel 520 or by way of laser-cutting the upper panel 520.

The second upper side panel 520 is preferably fabricated from a plastics material, for example one or more of: polypropylene, ABS, polyethylene, polycarbonate, polyacrylate, polyolefins, polyester, nylon, polystyrene or other resilient type of plastics material.

By integrally molding the clips 600 into the second upper side panels 520, functionality of retaining the load floor 230 at the raised angle can be achieved at substantially no extra cost to manufacturing of the vehicle 10. Moreover, such functionality is achieved in a user-convenient manner which avoids having to employ hooks or similar types of retaining devices which can be inconvenient when users are accessing the rear region of the vehicle 10 in adverse weather conditions, for example exchanging a punctured wheel on a dark rainy night.

Although the clips 600 are illustrated in Figures 2 to 4 with their resilient bendable portions 700 included rearward of their corresponding projections 710, the bendable portions 700 can optionally, as an alternative, be included forward of their projections 710. Moreover, although the projection 710 is shown with its inclined surface 720 directly rearwards to meet with the aforementioned edges of the load floor 230 when pivoted up to the raised angle, it will be appreciated that the projection 710 can be provided with complementary inclined surfaces facing forwards and rearwards so as to enable the load floor 230 to be more easily movable past the clips 600 in both pivoting directions of the load floor 230.

The load floor 230 can be fabricated from a pressed metal plate which is subsequently provided with an aesthetically acceptable surface covering, for example carpet material, which is resilient to scuffing and scratches. Alternatively, the load floor can be a plastics material molded component; optionally, such a plastics material molded load floor 230 can include molded therein one or more reinforcements, for example metal strengthening rods or integrally molded plastic ribs.

Terms used in describing and claiming the present invention such as "include", "comprise", "consist of", "have", "are", "incorporate", are to be construed in a non-exclusive manner, namely to allow for other parts or components to be present which are not explicitly indicated.

## Claims

1. A load floor system (230, 520, 540, 600) of a rear compartment of a road vehicle (10), said road vehicle (10) including a front transverse row of seats (100) and a rear transverse row of seats (110), said rear compartment being located rearwards of said rear transverse rows of seats, said system (230, 520, 540, 600) including a load floor (230) operable to bear a load (240) placed thereupon when the load floor (230) is disposed in a horizontal orientation in the rear compartment,
**characterized in that**
said load floor (230) is implemented as a planar panel being fabricated from at least one of pressed metal sheet, molded plastics material, molded plastics material including one or more reinforcements,
said load floor system (230, 520, 540, 600) further comprises a hinge arrangement disposed at a transverse axis (400) at a forward edge of the load floor (230), said load floor (230) being pivotable about said hinge arrangement from a horizontal orientation to a raised angle in relation to said horizontal orientation to provide user access to items (250, 610, 620) stored beneath said load floor (230), and said load floor system (230, 520, 540, 600) further includes clips (600) operable to resiliently engage with lateral edges (650) of the load floor (230) when the load floor (230) is at the raised angle for retaining said load floor (230) at said raised angle,
said clips (600) being integrally molded into side panels (520) of the rear compartment or said clips (600) being separately molded components which are adapted to be assembled onto the side panels (520).

2. A load floor system (230, 520, 540, 600) as claimed in claim 1, wherein the raised angle corresponds to the load floor (230) being in a substantially vertical orientation.

3. A load floor system (230, 520, 540, 600) as claimed in claim 1 or 2, wherein each of said clips (600) includes a resilient flexible member (700) coupled at its proximate end to its corresponding side panel (520) of the rear compartment, and at its distal end to a projection (710) operable to resiliently engage a corresponding lateral edge (650) of the load floor (230).

4. A load floor system (230, 520, 540, 600) as claimed in claim 3, wherein the projection (710) has an inclined surface (720) for providing a resilient force in operation in respect of the edge (650) of the load floor (230) for assisting with retaining the load floor (230) at the raised angle when the load floor (230) is user-pivoted to be substantially vertical in orientation at said raised angle.

5. A load floor system (230, 520, 540, 600) as claimed in any one of the preceding claims, wherein said hinge arrangement at said transverse axis (400) is configured to be spaced rearward apart from a pivotal axis of rear seats of the vehicle (10) by way of a separation panel (540).

6. A load floor system (230, 520, 540, 600) as claimed in claim 5, wherein the separation panel (540) is disposed to be horizontal in operation and is operable to be non-pivotal.

7. A load floor system (230, 520, 540, 600) as claimed in any one of the preceding claims, wherein said load floor (230) includes one or more reinforcement features (650) for increasing a load-bearing capability of the load floor (230).

8. A load floor system (230, 520, 540, 600) as claimed in any one of the preceding claims, wherein said load floor (230) is provided with at least one user handle (660) at a rear edge thereof remote from said hinge arrangement at said transverse axis (400), said user handle (660) being operable to assist with pivoting the load floor (230) from said horizontal orientation to said raised angle,

9. A load floor system (230, 520, 530, 600) as claimed in any one of the preceding claims, wherein said load floor (230) includes a raised peripheral region (650) around at least a part of a peripheral edge thereof.

## Patentansprüche

1. Ladeflächensystem (230, 520, 540, 600) eines hinteren Teils eines Kraftfahrzeugs (10), wobei das Kraftfahrzeug (10) ein vordere querverlaufende Sitzreihe (100) und eine hintere querverlaufende Sitzreihe (110) umfasst, wobei sich der hintere Teil hinter den hinteren querverlaufenden Sitzreihen befindet, wobei das System (230, 520, 540, 600) eine Ladefläche (230) umfasst, die eine darauf platzierte Ladung (240) tragen kann, wenn die Ladefläche (230) in einer horizontalen Ausrichtung im hinteren Teil angeordnet ist,
**dadurch gekennzeichnet, dass**
die Ladefläche (230) als eine ebene Platte ausgeführt ist, die aus einem tiefgezogenen Metallblech und/oder geformten Kunststoffmaterial und/oder geformten Kunststoffmaterial mit einer oder mehreren Verstärkungen hergestellt ist,
wobei das Ladeflächensystem (230, 520, 540, 600) ferner eine Scharnieranordnung umfasst, die an einer Querachse (400) an einer Vorderkante der Ladefläche (230) angeordnet ist, wobei die Ladefläche (230) um die Scharnieranordnung aus einer horizontalen Anordnung in einen erhöhten Winkel in Bezug zur horizontalen Ausrichtung verschwenkbar ist, um einem Benutzer Zugriff auf unter der Ladefläche (230) aufbewahrte Gegenstände (250, 610, 620) bereitzustellen, und wobei das Ladeflächensystem (230, 520, 540, 600) ferner Clips (600) umfasst, die elastisch in laterale Kanten (650) der Ladefläche (230) eingreifen können, wenn sich die Ladefläche (230) im erhöhten Winkel befindet, um die Ladefläche (230) im erhöhten Winkel zu halten,
wobei die Clips (600) in Seitenplatten (520) des hinteren Teils angeformt sind oder die Clips (600) getrennt geformte Komponenten sind, die dazu eingerichtet sind, an den Seitenplatten (520) angebracht zu werden.

2. Ladeflächensystem (230, 520, 540, 600) nach Anspruch 1, wobei der erhöhte Winkel der Ladefläche (230) im Wesentlichen in vertikaler Ausrichtung entspricht.

3. Ladeflächensystem (230, 520, 540, 600) nach Anspruch 1 oder 2, wobei jeder der Clips (600) ein elastisches, flexibles Element (700) umfasst, das mit dem proximalen Ende an seiner zugehörigen Seitenplatte (520) des hinteren Teils und mit dem distalen Ende mit einem Vorsprung (710), der in die zugehörige laterale Kante (650) der Ladefläche (230) elastisch eingreifen kann, gekoppelt ist.

4. Ladeflächensystem (230, 520, 540, 600) nach Anspruch 3, wobei der Vorsprung (710) eine geneigte Fläche (720) aufweist, um beim Betrieb eine elastische Kraft in Bezug zur Kante (650) der Ladefläche (230) bereitzustellen, um dabei zu helfen, die Ladefläche (230) im erhöhten Winkel zu halten, wenn die Ladefläche (230) vom Benutzer in die im Wesentlichen vertikale Ausrichtung in den erhöhten Winkel verschwenkt wird.

5. Ladeflächensystem (230, 520, 540, 600) nach einem der vorstehenden Ansprüche, wobei die Scharnieranordnung an der Querachse (400) dazu ausgelegt ist, nach hinten von einer Schwenkachse der Rücksitze des Fahrzeugs (10) durch eine Trennplatte (540) beabstandet zu sein.

6. Ladeflächensystem (230, 520, 540, 600) nach Anspruch 5, wobei die Trennplatte (540) dazu angeordnet ist, im Betrieb horizontal zu sein, und nicht verschwenkbar sein kann.

7. Ladeflächensystem (230, 520, 540, 600) nach einem der vorstehenden Ansprüche, wobei die Ladefläche (230) ein oder mehrere Verstärkungsmerkmale (650) umfasst, um die Tragfähigkeit der Ladefläche (230) zu erhöhen.

8. Ladeflächensystem (230, 520, 540, 600) nach einem der vorstehenden Ansprüche, wobei die Ladefläche (230) mit mindestens einem Benutzergriff (660) an ihrer Hinterkante, von der Scharnieranordnung an der Querachse (400) entfernt, versehen ist, wobei der Benutzergriff (660) beim Verschwenken der Ladefläche (230) aus einer horizontalen Ausrichtung in den erhöhten Winkel helfen kann.

9. Ladeflächensystem (230, 520, 530, 600) nach einem der vorstehenden Ansprüche, wobei die Ladefläche (230) einen erhöhten Randbereich (650) um mindestens einen Teil ihrer Außenkante umfasst.

## Revendications

1. Système de plancher de chargement (230, 520, 540, 600) d'un compartiment arrière d'un véhicule routier (10), ledit véhicule routier (10) comprenant une rangée transversale de sièges avant (100) et une rangée transversale de sièges arrière (110), ledit compartiment arrière étant situé à l'arrière de ladite rangée transversale de sièges arrière, ledit système (230, 520, 540, 600) comportant un plancher de chargement (230) apte à supporter une charge (240) placée sur celui-ci lorsque le plancher de chargement (230) est disposé dans une orientation horizontale dans le compartiment arrière,
**caractérisé en ce que**
ledit plancher de chargement (230) est réalisé sous la forme d'un panneau plan fabriqué à partir d'au moins l'un parmi une tôle métallique pressée, une matière plastique moulée, une matière plastique moulée incluant un ou plusieurs renforcements,
ledit système de plancher de chargement (230, 520, 540, 600) comprend en outre un agencement de charnière disposé au niveau d'un axe transversal (400) au niveau d'un bord avant du plancher de chargement (230), ledit plancher de chargement (230) pouvant pivoter autour dudit agencement de charnière depuis une orientation horizontale jusqu'à un angle relevé par rapport à ladite orientation horizontale pour fournir à l'utilisateur un accès à des articles (250, 610, 620) rangés sous ledit plancher de chargement (230), et ledit système de plancher de chargement (230, 520, 540, 600) comprend en outre des pinces (600) aptes à venir en prise de manière élastique avec des bords latéraux (650) du plancher de chargement (230) lorsque le plancher de chargement (230) est orienté suivant l'angle relevé pour retenir ledit plancher de chargement (230) suivant ledit angle relevé,
lesdites pinces (600) étant moulées intégralement dans des panneaux latéraux (520) du compartiment arrière ou lesdites pinces (600) étant des composants moulés séparément qui sont prévus pour être assemblés sur les panneaux latéraux (520).

2. Système de plancher de chargement (230, 520, 540, 600) selon la revendication 1, dans lequel l'angle relevé correspond à l'angle suivant lequel le plancher de chargement (230) est dans une orientation sensiblement verticale.

3. Système de plancher de chargement (230, 520, 540, 600) selon la revendication 1 ou 2, dans lequel chacune desdites pinces (600) comporte un organe flexible élastique (700) accouplé au niveau de son extrémité proximale à son panneau latéral correspondant (520) du compartiment arrière, et au niveau de son extrémité distale à une saillie (710) apte à venir en prise élastique avec un bord latéral correspondant (650) du plancher de chargement (230).

4. Système de plancher de chargement (230, 520, 540, 600) selon la revendication 3, dans lequel la saillie (710) présente une surface inclinée (720) pour fournir une force élastique pendant le fonctionnement par rapport au bord (650) du plancher de chargement (230) de manière à faciliter la rétention du plancher de chargement (230) à l'angle relevé lorsque le plancher de chargement (230) est pivoté par l'utilisateur de manière à être sensiblement orienté verticalement suivant ledit angle relevé.

5. Système de plancher de chargement (230, 520, 540, 600) selon l'une quelconque des revendications précédentes, dans lequel ledit agencement de charnière au niveau dudit axe transversal (400) est configuré pour être espacé vers l'arrière à l'écart d'un axe de pivotement de sièges arrière du véhicule (10) au moyen d'un panneau de séparation (540).

6. Système de plancher de chargement (230, 520, 540, 600) selon la revendication 5, dans lequel le panneau de séparation (540) est disposé de manière à être horizontal pendant le fonctionnement et est capable de ne pas pivoter.

7. Système de plancher de chargement (230, 520, 540, 600) selon l'une quelconque des revendications précédentes, dans lequel ledit plancher de chargement (230) comporte un ou plusieurs éléments de renforcement (650) pour augmenter la capacité de support de charge du plancher de chargement (230) .

8. Système de plancher de chargement (230, 520, 540, 600) selon l'une quelconque des revendications précédentes, dans lequel ledit plancher de chargement (230) est pourvu d'au moins une poignée d'utilisateur (660) au niveau d'un bord arrière de celui-ci éloigné dudit agencement de charnière au niveau dudit axe transversal (400), ladite poignée d'utilisateur (660) étant apte à faciliter le pivotement du plancher de chargement (230) de ladite orientation horizontale audit angle relevé.

9. Système de plancher de chargement (230, 520, 540, 600) selon l'une quelconque des revendications précédentes, dans lequel ledit plancher de chargement (230) comporte une région périphérique relevée (650) autour d'au moins une partie d'un bord périphérique de celui-ci.
